# EUROPEAN PATENT APPLICATION

(11) **EP 1 653 344 A1**
(43) Date of publication of application: **03.05.2006**
(21) Application number: 05021532.6
(22) Date of filing: 30.09.2005
(51) Int. Cl.: G06F 9/42, G06F 9/44, G06F 9/46, H04Q 3/00

(54) **Embedded detection objects**

(30) Priority: 01.11.2004 US 978666
(71) Applicant: Hewlett-Packard Development Company, L.P., Houston, TX 77070 (US)
(72) Inventor: Reeves, Robert L., Plano, TX 75075 (US); Evans, Mark S., Plano, TX 75025 (US); Gerhardt, Alan L., Pittsburg, TX 75686 (US); Hines, Warner Lee, Southlake, TX 75010 (US); Parker, Raymond M., Carrollton, TX 75010 (US); Schepers, Paul D., Frisco, TX 75034 (US)
(74) Representative: Schoppe, Fritz

(57) **Abstract**

Programs, methods and devices are provided for detecting object corruption in a program 305, 373. One embodiment includes a computing device 110 having a processor 114 and a memory 124 coupled to the processor. The memory 124 includes a program having an embedded detection object 208, 212 associated with a class definition 210 in the program. The detection object contains a predefmed data string 208 that can be tested when an object is destroyed 373.

## Description

### Introduction

Computing devices, e.g., devices having processor and memory resources, are used as "network devices" to perform various roles and tasks within intelligent networks (INs). Computing devices include an operating system layer and an application program layer. The operating system layer includes a "kernel". The kernel is a master control program that runs the computing device. The kernel provides functions such as task management, device management, and data management, among others. The application layer includes software programs (such as service logic programs (SLPs) used in telecommunication networks) that perform particular tasks. The application layer is referred to as being in "user space", while the operating system layer can be referred to as "kernel space". As used herein, "user space" implies a layer of code which is less privileged than the layer of code which is in the operating system layer or "kernel space". This user space code is also referred to herein as "user class" code. Data which is accessible by a user executed routine is referred to as "user class" data.

To create software programs, software developers write source code in a programming language such as C/C++, Java, etc. The source code is later compiled to create a finished program. A compiler is software that converts programming language statements (e.g., written in C/C++, Java, etc) into a lower-level representation. For example, source files are passed through appropriate compilers to create code object files to export to the linker utility. From the source code and "header" or "include" files, an appropriate compiler "compiles" or generates object modules or files. Upon successful creation of object files, a linker utility "links" or combines the object files with standard libraries (e.g., graphics, I/O routines, startup code, and the like) to generate executable program modules. A linker utility is a tool which takes one or more of object files as input and builds a binary out of them, i.e. machine language. Thus, a "linker" combines all required machine language modules into an executable program that can run in the computer.

There are cases where a C++ program may incorrectly overwrite the contents of an object file, causing unpredictable results. The inadvertent corruption of a user class object can be due to program logic error, instruction stack corruption, etc. For example, user class object corruption will typically occur if program logic writes past the boundary of a known data area that is adjacent in memory to the object being corrupted, or within the user's object class. Such incorrect overwrites can be difficult to detect. Moreover, debugging a program becomes more difficult the more removed in time detection of user class object corruption occurs from the actual occurrence of the corrupting event.

### Brief Description of the Drawings

Figure 1 is a block diagram of a computer system suitable to implement embodiments of the invention.
Figure 2A illustrates an example of object modeling including program embodiments of the present invention.
Figure 2B illustrates an embodiment having an embedded detection object associated with a class definition.
Figure 3A is a block diagram of a software development system suitable for creating program embodiments described herein.
Figure 3B is a flowchart illustrating the continuance of a programs life cycle from the development environment in Figure 3A to actual use in customer environment.
Figure 4 is an example system illustration such as for a wireless telecommunications network showing the interaction between a number of network functions and service functions which can include program embodiments as described herein.

### Detailed Description

Embodiments of the present invention cover networks and devices including an object oriented program having an embedded detection object associated with a class definition in the program. The detection object contains a predefined data string that can be tested when an object is destroyed to detect object corruption close to the occurrence of the corruption event. One of ordinary skill in the art will appreciate that in association with modular programming destructive memory is employed. As used herein, destructive memory is intended to mean memory that loses its content when it is read. Various known refresh operations can regenerate the content after the read operation. "Object destruction", as used herein, refers to the action of an object being deleted from memory when that object is no longer in use or no longer within the context of the program being used.

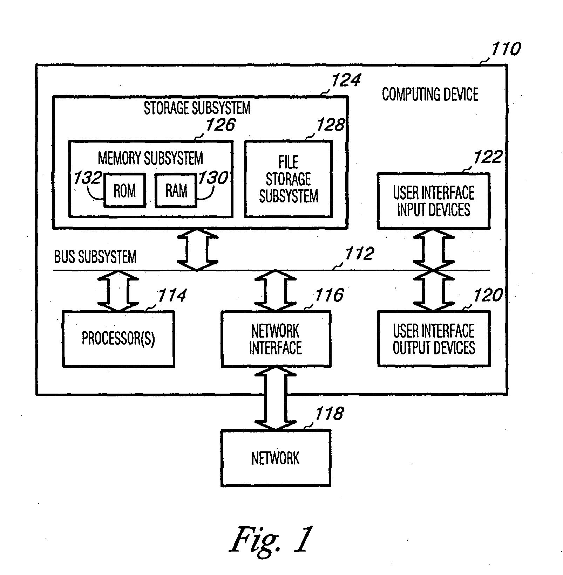

Figure 1 is a block diagram of a computer system 110 suitable to implement embodiments of the invention. Computer system 110 includes at least one processor 114 which communicates with a number of other computing components via bus subsystem 112. These other computing components may include a storage subsystem 124 having a memory subsystem 126 and a file storage subsystem 128, user interface input devices 122, user interface output devices 120, and a network interface subsystem 116, to name a few, as the same will be appreciated by one of ordinary skill in the art. Network interface subsystem 116 provides an interface to outside networks, including an interface to network 118 (e.g., a local area network (LAN), wide area network (WAN), Internet, and/or wireless network, among others), and is coupled via network 118 to corresponding interface devices in other computer systems. Bus subsystem 112 provides a mechanism for letting the various components and subsystems of computer system 110 communicate with each other as intended. Program embodiments described herein can be executed on a computing device or system such as illustrated in Figure 1.

Program embodiments discussed herein relate to object oriented programming. One type of popular programming is modular programming, e.g., object oriented programming, which breaks down the design of a program into individual components (modules) that can be programmed and tested independently. Object oriented programming is a form of modular programming with more formal rules that allow pieces of software to be reused and interchanged between programs. Object oriented programming concepts include encapsulation, inheritance, and polymorphism. Encapsulation is the creation of self-sufficient modules that contain the data and the processing (data structure and functions that manipulate that data). These user-defined, or abstract, data types are called "classes." One instance of a class is called an "object." For example, in a payroll system, a class could be defined as Manager, and Pat and Jan, the actual objects, are instances of that class. Classes are created in hierarchies. Inheritance allows the knowledge in one class to be passed down the hierarchy. That means less programming is required when adding functions to complex systems. If a step is added at the bottom of a hierarchy, then only the processing and data associated with that unique step needs to be added. Everything else about that step is inherited.

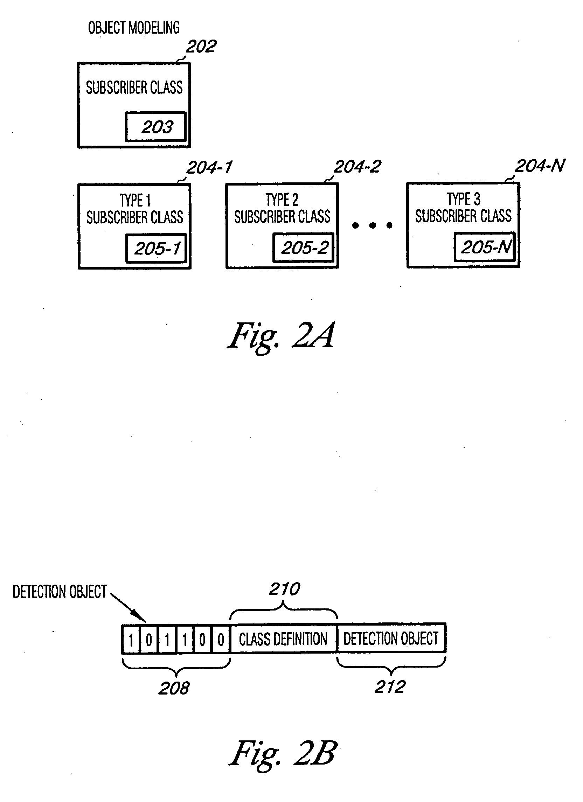

Figure 2A provides an exemplary illustration of object modeling. In earlier programming, program data would be in separate databases apart from the processing routines even though the data and processing are naturally related since software causes the computer to process data. In object technology building blocks are used which contain both the data and the processing ("attributes" and the "methods"). For example, in a wireless telecommunications program, a subscriber object would contain subscriber data, e.g., name, billing address, etc., and contains the kinds of processing that would take place for a subscriber to place a call.

In Figure 2A a subscriber class 202 along with a number of subclasses 204-1, 204-2, ..., 204-N (labeled as Type 1 subscriber class, Type 2 subscriber class, and Type N subscriber class, respectively), are shown. The term "subscriber" and Type 1, Type 2, and Type N are exemplary labels, e.g., as may used with a wireless telecommunication program, for the classes and subclasses. The designator "N" is used to indicate that a number of subclasses may exist under to particular class. Figure 2A illustrates the power of inheritance and encapsulation with object modeling. That is, instead of building a table of subscribers with subscriber information and wireless privilege access information in separate tables the type of subscriber is modeled. The subscriber class contains the data and the processing for all subscribers. Each subclass, e.g., Type 1, Type 2, Type N, etc., contains the data and processing unique to that subscriber's type, for example, roaming rights, useable minutes, etc. Changes can be made globally or individually. Object oriented programming allows procedures about object to be created whose exact type is not known until runtime.

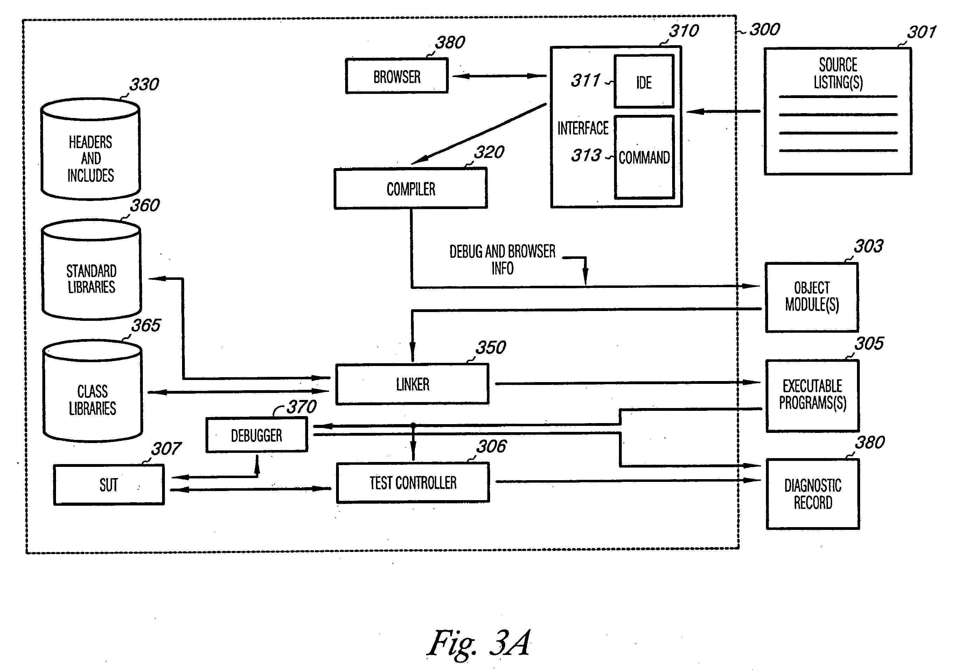

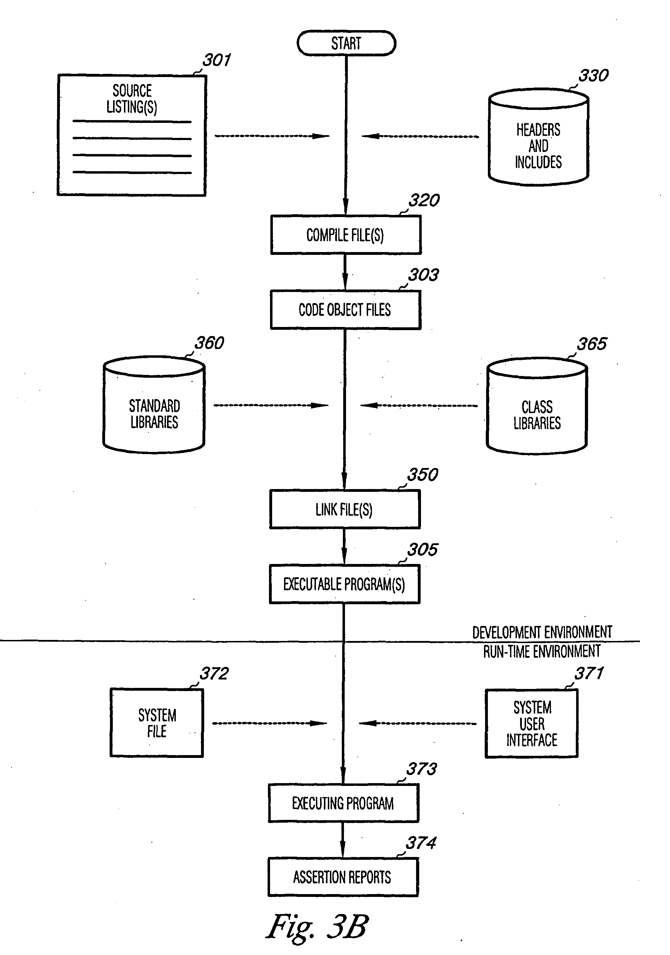

According to embodiments of the present invention, a detection object is embedded into a class definition in the object oriented program. The embedded detection object and class definition is illustrated as 203 in connection with subscriber class 202, and are illustrated as 205-1, 205-2, and 205-N in connection with Type 1 subscriber class, Type 2 subscriber class, and Type N subscriber class. As will be explained in more detail in connection with Figures 3A and 3B, embodiments of the present invention include a software developer writing source code to create a program having a detection object embedded with the class definition for a class object. As the reader will appreciate a class definition is data associated with the class object, i.e., data that defines the class object. That is, in modular programming for each program module that a software developer writes, the developer will define each class object with a data description, referred to as a "class definition", that identifies, labels, and/or describes the particular class object. As discussed below in connection with Figure 2B, the detection objects are a predefined bit strings which the software developer associates with each class definition.

Figure 2B illustrates an embodiment of a detection object, 208 and 212, embedded, i.e., associated, with a class definition 210 for a class object, e.g., 202, 204-1, 204-2, ..., 204-N, within a given program. As shown in Figure 2B, the detection object is provided as a predefined bit string, 208 and 212, embedded with the class definition 210. For example, detection object 208 is illustrated as a string of bits. In the exemplary embodiment of Figure 2B, the detection object is placed like a sentinel both at the beginning 208 and the end 212 of the class definition since corruption would typically occur if program logic writes past the boundary of a known data area that is adjacent to the object being corrupted. Detection objects placed at both the beginning 208 and end 212 of the class definition will catch corruption at either boundary to the known data area of the class definition.

According to embodiments of the present invention, program instructions are storable in memory and executable by a processor (such as shown in Figure 1) to check the detection object, 208 and 212, and to determine the class object, 202, 204-1, 204-2, ..., 204-N, integrity, e.g., whether an object has been corrupted. In at least one embodiment, the program instructions execute to check the detection object 208 and 212 when an object is destroyed, i.e. removed from memory. Program instructions execute to test the embedded detection object by comparing the predefined data string 208 and 212 against a reference data string, e.g., stored in memory (such as memory shown in Figure 1). From reading this disclosure, one of ordinary skill in the art will appreciate the manner in which a program can be written to include program instructions that execute to compare the predefined data string 208 and 212 embedded with a user class definition 210 to a reference data string located in memory.

In some embodiments, the comparison of the predefined data string to the reference data string (hereinafter "comparison") can be more aggressively applied, e.g., upon each user data access, rather than just at the time of object destruction. As used herein, "user data access" refers to the execution of a routine in a program in which "user class" data is accessed by the routine. Hence, in such embodiments, the comparison occurs each time a routine, e.g., computer executable instructions in a program, executes to access "user class" data and not solely when an object is destroyed. A class definition associated with a "user class" object, e.g., one accessible by routines executed by a computer user, is referred to herein as a "user class definition".

As will be discussed in more detail in connection with Figures 3A and 3B, program embodiments included instructions which execute to cause a program assertion to fail when the predefined data string and the reference data string do not match. The assertion failure gives the user a swift indication that an object class has been corrupted. Previously, the user would not have had an indication that an object class had been corrupted until sometime later when enough corrupted objects had accumulated, possibly a significant number, to cause a user perceivable impact on the program performance. The more corrupted objects accumulate in the code before being noticed, the more difficult debugging the code to correct the situation becomes. As the reader will appreciate, a significant amount of code corruption can occur before the user begins to exteriorly notice malfunctioning in a program. Hence, by checking an object class for corruption each time an object class is destroyed and causing a program assertion to fail, the user will obtain earlier notice of the code error, e.g., closer in time to the occurrence of the object class corruption, than would be the case in waiting for a user perceivable deterioration in program performance. This will further assist to attenuate the accumulation of code corruption.

In some embodiments, the program instructions execute to cause a running program to abort upon the detection of a corrupted object to immediately cause a user to address the situation and to even more directly avoid the accumulation of corrupted objects in the code.

As the reader will appreciate, whether the comparison is performed each time an object is destroyed or upon each user data access, and whether the detection causes an assertion to fail or the program to abort, the user will be receiving an earlier indication of potentially troublesome issues within the program code than would occur if a user were relying upon detecting a user perceivable deterioration in the program performance. Stated otherwise, the embodiments of the present invention provide notice of object corruption to the program user closer in time to the occurrence of the object class corruption.

Figure 3A illustrates an example of object oriented programming. As noted earlier, C++ and Java are examples of object oriented programming languages. Object oriented programming languages are used by software developers in the telecommunications field to provide service logic programs (SLPs) deployable in a service logic execution environment (SLEE). One of ordinary skill the art will appreciate the terms SLP and SLEE upon reading this disclosure. More discussion is not provided herein so as not to obscure aspects of the invention discussed below.

Figure 3A is a block diagram of a software development system 300 suitable for creating programs having embedded detection objects as the same have been described herein. Figure 3A is provided to illustrate the development environment in which a program developer can write a program to include a detection object embedded with the class definition for a class object, can create program instructions which execute to compare the detection object, expressed as a predefined bit string, with a reference data string, and can create program instructions which execute to cause an assertion to fail or a program to abort when the detection object does not match the reference data string. As shown in the example embodiment of Figure 3A, the developer writes source code 301 for a program, e.g., for an SLP program. Once the developer has written this code it is provided to a compiler 320 and a linker utility 350 via an interface 310. Further, the interface 310 can include both command-line driven 313 and Integrated Development Environment (IDE) 311 interfaces. The former accepts user instructions through command-line parameters. The latter provides menuing equivalents thereof. The IDE can be provided as a GUI interface including a main menu, a toolbar, a client area (for editing source listings), and a status line, etc. From the source code 301 and header and includes files 330, as the same are known and understood by one of ordinary skill in the art, the compiler 320 "compiles" or generates object modules or files 303. As shown, the compilation process may include debugging and browsing information; specifically, explicit references to the symbols of the source listings (e.g., line numbers) are stored in the object modules 303. As shown in the embodiment of Figure 3A, the debugging and browsing information can be referenced by a browser 3 80 (e.g., through the interface 310).

Upon successful creation of object files, a linker 350 next "links" or combines the object files 303 with standard libraries 360 (e.g., graphics, I/O routines, startup code, and the like) to generate executable program(s) 305, which may be executed by a target processor (e.g., processor 114 of Figure 1). In addition to standard libraries 360, development system 300 can provide class libraries 365, e.g., C++ libraries.

As shown in Figure 3A, an executable program(s) 305 can be connected to a test controller 306 and a system under test (SUT) 307 in order to test program(s) 309. As programs are developed they are tested under a workload, e.g., a SUT, to ensure that the programs will function as intended. The executable programs 305 can be provided to a debugging module 370 for eliminating errors in the source code listings 301. One of ordinary skill in the art will appreciate the manner in which a debugging module 370 in cooperation with a SUT 307 and test controller 306 can produce a diagnostic record 380 for an executable program 305. The debugging module 370 executes as set of software instructions in cooperation with a SUT 307 and test controller 306 to produce a diagnostic record 380 (e.g., including a record of failed assertions) for an executable program 305.

As recognized in the art, assertions can be checked as part of the above testing. Assertions are a technique used to detect errors in software. In the field of software development, assertions are purposefully placed in the source code as it is written. As programs are compiled and/or tested the assertions are checked to verify conditions always believed to be true. A run time test put in place by a developer will check to see if assertions have failed. In this manner assertions provide an early clue to potential problems in the code such that one can stop and debug early rather than later in an effort to avoid glitches in the code. Thus, assertions help catch bugs and detect invalid states of execution in a program. Assertions can include run time assertions, compile time assertions, as well as assertions associated with hardware and circuitry.

According to various embodiments, a developer can embed detection objects with class definitions of class objects during this debugging phase. One of ordinary skill in the art will appreciate upon reading this disclosure the manner in which a developer can write a program which includes instructions that execute to embed detection objects with class definitions. As one example, the developer can use the IDE 311 of the user interface 310 to embed detection objects with class definitions during the debugging phase.

Figure 3B is a flowchart illustrating the continuance of a programs life cycle from the development environment in Figure 3A to actual use in customer environment (also referred to as a "run time" environment). The development environment portion of Figure 3B mirrors the discussion which was provided in Figure 3A. As shown in Figure 3B, the executable programs (e.g., product) can then be loaded onto a device to sell to a customer once the development environment process is complete. Likewise, the product can be shipped on disk to a customer and the customer can load the programs onto their system.

Figure 3B is useful for illustrating the operation of a program having embedded detection objects, as described herein, loaded on a customer system in a run time environment. As illustrated in Figure 3B, a system user, e.g., system administrator, can interact with an executing program 373 running on the customer system using such tools as a system user interface 371 and a customer "system file" 372 (which may also contain software programs to perform debugging routines on an executing program 373).

According to embodiments described above in connection with Figures 2A and 2B, programs instructions are provided which execute to test the embedded detection objects in the executing program 373. When an embedded object associated with a class definition does not match the reference bit string, program embodiments will execute to cause an assertion to fail. As shown in the embodiment of Figure 3B, the failed assertion can be reported to a program user in the form of an assertion report 374. This will provide the program user with a more timely notice that corruption has occurred in the program. As noted above, the failed comparison could also, in some embodiments, cause the program to abort. The user could then employ a debugging routine in the system file 373 to address and correct the code malfunction before and inordinate amount of code becomes corrupted, possibly making debugging unfeasible.

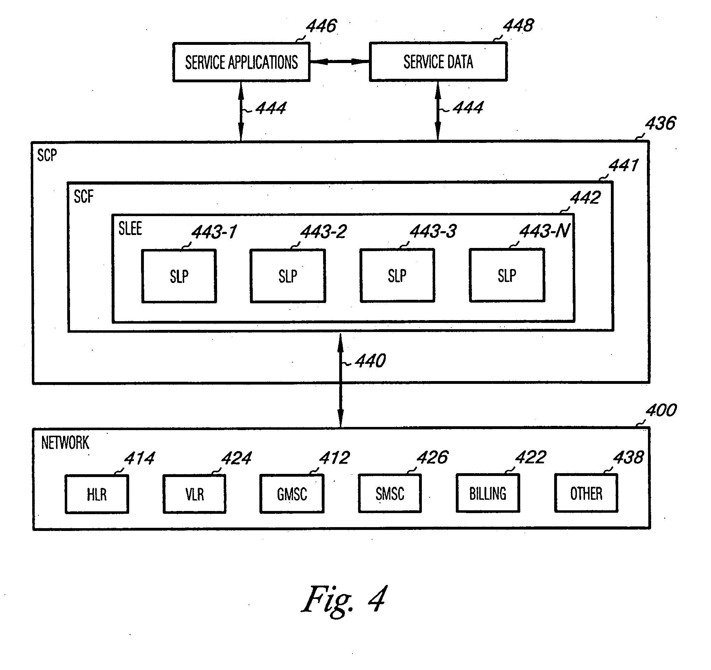

Figure 4 is an example illustration a system network, e.g., a wireless telecommunications network, showing the interaction between a number of network functions and service functions which can include program embodiments (exemplified here as service logic programs (SLPs)) having embedded detection objects as the same have been described herein. Figure 4 is an example illustration of the interaction between a number of network functions and service functions. In Figure 4, a number of functions within network 400 interact with a number of services provided through a service control point (SCP) 436. Network functions, e.g., home location register (HLR) 414, visitor location register (VLR) 424, gateway mobile switching center/controller (GMSC) 412, service mobile switching center/controller (SMSC) 426, billing 422, and other functions 438, can communicate requests for services including requests for data, communications between devices or networks, and the like, which will employ SLPs. These requests for services and the responses to such requests can be provided by a number of different protocols, such as intelligent network application part (INAP), mobile application part (MAP), customized applications for mobile network enhanced logic (CAMEL), and capability set (CS) protocols, etc. The requests are directed to the SCP 436 via transaction capabilities application part (TCAP) messages 440 to create a session, e.g., message exchange, with an SLP 443-1, 443-2, 443-3, ... 443-M within a SLEE 442. The designator "M" is used to illustrate that a number of such SLPs can be created. The SLEE is an environment in which SLP instances are created. The SLEE 442 can provide the role of a service control function (SCF) 441 on the SCP 436.

A given SLP may connect via a communication link 444 with one of a number of service applications 446 and/or service data 448 to fulfill the requests for services. In some embodiments, service applications can be of various types and can be grouped based upon the type of services they provide. For example, Parlay service applications, as the same will be will be understood by one of ordinary skill in the art, or other such service application groups can be used.

Although specific embodiments have been illustrated and described herein, those of ordinary skill in the art will appreciate that an arrangement calculated to achieve the same techniques can be substituted for the specific embodiments shown. This disclosure is intended to cover adaptations or variations of various embodiments of the invention. It is to be understood that the above description has been made in an illustrative fashion, and not a restrictive one. Combination of the above embodiments, and other embodiments not specifically described herein will be apparent to those of skill in the art upon reviewing the above description. The scope of the various embodiments of the invention includes other applications in which the above structures and methods are used. Therefore, the scope of various embodiments of the invention should be determined with reference to the appended claims, along with the full range of equivalents to which such claims are entitled.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A network device, comprising:
a processor 114;
a memory 124 coupled to the processor; and
program instructions storable in memory and executable by the processor to:
test an embedded detection object 208, 212 included in a program 305, 373 and defined as a class object 203, 205-1, 205-2, ..., 205-N, when an object is destroyed; and
cause the program to abort 374 when the test of the detection object fails.

2. The device of claim 1, wherein the embedded detection object 212 includes a data string 208, and wherein the program instructions can execute to:
compare the detection object data string 208 against a reference data string storable in memory 124; and
cause a program assertion to fail 374 when the detection object data string and the reference data string do not match.

3. The device of claim 2, wherein the program instructions can execute to compare the detection object 208 data string against the reference data string upon each user data access.

4. The device of claim 1, wherein the program instructions can execute to test an embedded detection object located at both a beginning 208 and an end 212 of a user class definition 210 in the program 305, 373.

5. The device of claim 1, wherein the detection object 208, 212 includes a detection object embedded at both a beginning 208 and an end 212 of a C++ user class definition 210 in the program 305, 373.

6. The device of claim 1, wherein the detection object 208, 212 includes a detection object embedded using an object oriented programming language 301 to define the detection object as a class object 203, 205-1, 205-2, ..., 205-N.

7. The device of claim 1, wherein the program is a service logic program (SLP) 443-1, 443-2, 443-3, ..., 443-N executable in a service logic execution environment (SLEE) 442, wherein the detection object can be tested in a run time environment when the object is destroyed 373.

8. The device of claim 7, wherein the SLEE 442 is included in a multiple SLEE environment.
